# EUROPÄISCHE PATENTSCHRIFT

(11) **EP 1 453 410 B1**
(45) Veröffentlichungstag und Bekanntmachung des Hinweises auf die Patenterteilung: **06.05.2009**
(21) Anmeldenummer: 02774781.5
(22) Anmeldetag: 13.11.2002
(51) Int. Cl.: A47L 9/24, F16L 37/084

(54) **KUPPLUNG EINES ROHR- ODER STANGENFÖRMIGEN TEILES MIT EINEM ANDEREN TEIL**
COUPLING JOINING AT LEAST ONE TUBULAR OR BAR-SHAPED PART TO ANOTHER PART
RACCORD D'AU MOINS UNE PIECE EN FORME DE TUBE OU DE BARRE A UNE AUTRE PIECE

(30) Priorität: 03.12.2001 DE 10159255
(43) Veröffentlichungstag der Anmeldung: 08.09.2004
(73) Patentinhaber: BSH Bosch und Siemens Hausgeräte GmbH, 81739 München (DE)
(72) Erfinder: PRELL, Manfred, 97702 Münnerstadt (DE); HAMM, Silvio, 98617 Sülzfeld (DE); BECK, Wolfgang, 97618 Niederlauer (DE)
(86) Internationale Anmeldenummer: PCT/EP2002/012707
(87) Internationale Veröffentlichungsnummer: WO 2003/047413

(56) Entgegenhaltungen:
- EP-A- 0 937 435
- US-A- 5 310 226
- US-A- 5 954 370

## Beschreibung

Die vorliegende Erfindung betrifft ein Kupplungsteil zum Verbinden mindestens eines rohr- oder stangenförmigen Teiles mit einem anderen Teil, das mindestens ein das rohr- oder stangenförmige Teil aufnehmendes Hülsenteil aufweist, wobei an der Innenseite des Hülsenteiles mindestens ein erstes Rastelement vorgesehen ist, das mit einem am rohr- oder stangenförmigen Teil vorgesehenen ersten Gegenrastelement zusammenwirkt und die Rastverbindung des ersten Rast- und Gegenrastelementes durch eine Verstellbewegung des Hülsenteiles lösbar ist gemäß dem Oberbegriff des Anspruchs 1.

Derartige Verbindungen ergeben sich beispielsweise beim Anstecken eines Staubsaugerrohres an den Anschlußstutzen eines Staubsaugermundstückes, wie diese gattungsbildend aus der US 5,954,370 A bekannt ist. Dabei sind das Staubsaugerrohr und die Anstecköffnung des Anschlußstutzens konisch geformt. Bei der Durchführung von Saugarbeiten wird das Staubsaugerrohr entsprechend stark in die Aufnahmeöffnung des Anschlußstutzens hineingedrückt, so dass eine Trennung von Saugrohr und Mundstück oft nur mit hohem Kraftaufwand möglich ist.

Der Erfindung liegt die Aufgabe zugrunde eine Verbindungsmöglichkeit für ein rohr- oder stangenförmiges Teil zu schaffen, die sich durch eine leichte Lösbarkeit auszeichnet.

Nach der Erfindung gelingt die Lösung dieser Aufgabe mittels eines Kupplungsteiles zum Verbinden mindestens eines rohr- oder stangenförmigen Teiles mit einem anderen Teil, wobei das Kupplungsteil mindestens ein das rohr- oder stangenförmige Teil aufnehmendes Hülsenteil aufweist, an der Innenseite des Hülsenteiles mindestens ein erstes Rastelement vorgesehen ist, das mit einem am rohr- oder stangenförmigen Teil vorgesehenen ersten Gegenrastelement zusammenwirkt und die Rastverbindung des ersten Rast- und Gegenrastelementes durch eine Verstellbewegung des Hülsenteiles lösbar ist. Zum Lösen der Verbindung braucht lediglich das Hülsenteil entsprechend verstellt zu werden, was kaum Kraftaufwand erfordert. Nach der Entrastung des ersten Rast- und Gegenrastelementes kann das rohr- oder stangenförmige Teil aus dem Hülsenteil herausgezogen werden, was ebenfalls nur einen geringen Kraftaufwand erfordert, da das rohr- oder stangenförmige Teil wegen der Halterung durch die Rastverbindung nur lose in das Hülsenteil eingesteckt ist.

Eine einfache Rastverbindung wird dadurch erzielt, dass mindestens an einem elastischen Bereich des Hülsenteiles als erstes Rastelement eine Rastnase vorgesehen ist, die in einer als erstes Gegenrastelement dienenden Vertiefung oder Ausschnittsöffnung des rohr- oder stangenförmigen Teiles verrastet ist.

Eine ausreichende Elastizität für die Funktionsfähigkeit der Rastverbindung ergibt sich -dadurch, dass der elastische Bereich aus einem durch Längsschnitte gegenüber der Wand des Hülsenteiles abgetrennten Streifen besteht.

Dadurch, dass der elastische Bereich durch eine Verschiebe- oder Verdrehbewegung des Hülsenteiles im Sinne eines Lösens der Rastverbindung gegenüber dem ersten Rast- und Gegenrastelement auslenkbar ist, kann die Rastverbindung auf einfachste Weise gelöst werden.

Das zum Lösen der Rastverbindung notwendige Auslenken des elastischen Bereiches läßt sich mit einfachen konstruktiven Mitteln dadurch bewirken, dass der elastische Bereich mit einer Anlaufschräge versehen ist, die bei der Verschiebe-oder Verdrehbewegung des Hülsenteiles auf eine am anderen Teil ausgebildete Gegenschräge aufgleitet.

Eine eigenständige Einheit eines Kupplungsteiles wird dadurch verwirklicht, dass das andere Teil als eine in das Hülsenteil eingesteckte Innenhülse ausgebildet ist, die ihrerseits mit ihrem freien Ende mit einem weiteren Element verbindbar ist.

Ein stets einsatzbereites Kupplungsteil ergibt sich dadurch, dass das Hülsenteil und die Innenhülse durch ein Federelement in ihrer Ausgangslage zueinander gehalten und durch dieses Federelement nach einer Verschiebe- oder Verdrehbewegung des Hülsenteiles wieder in ihre Ausgangslage bringbar sind. Durch die selbsttätige Rückstellung der Innenhülse und des Hülsenteiles in ihre zueinander ausgerichtete Ausgangsstellung steht das Kupplungsteil nach einem Trennen einer vorher bestehenden Verbindung ohne weiteres Zutun wieder für die Herstellung einer neuen Verbindung zur Verfügung.

Ein unkontrolliertes Wiederzurückschnappen des ersten Rast- und Gegenrastelementes in die Raststellung nach einem Lösen derselben wird dadurch verhindert, dass an der Innenhülse und dem Hülsenteil mindestens je ein zweites Rast- und Gegenrastelement vorgesehen sind, die in der durch die Verschiebe- oder Verdrehbewegung des Hülsenteiles bewirkten Lösestellung des ersten Rast- und Gegenrastelementes ihre Verrastungstellung einnehmen und bei in das Hülsenteil eingestecktem rohr- oder stangenförmigen Teil durch dieses in ihrer Verrastungsstellung gehalten sind. Durch das zweite Rast- und Gegenrastelement erfolgt eine Verriegelung des Kupplungsteiles in der Lösestellung des ersten Rast- und Gegenrastelementes, so dass ein Zurückschnappen dieser Elemente in ihre Raststellung nicht möglich ist. Durch eine solche Ausgestaltung des Kupplungsteiles wird außerdem eine Einhandbedienung besonders begünstigt.

Eine in konstruktiver Hinsicht besonders günstige Ausführungsform ist dadurch gekennzeichnet, dass das zweite Rast- und Gegenrastelement sowohl umfangsmäßig als auch in axialer Richtung gegenüber dem ersten Rast- und Gegenrastelement versetzt sind, wobei die axiale Versetzung in Auszugsrichtung des rohr- oder stangenförmigen Teiles aus dem Hülsenteil vorgenommen ist. Durch die axiale Versetzung in Auszugsrichtung wird sichergestellt, dass beim Herausziehen des rohr- oder stangenförmigen Teiles die Lösestellung des ersten Rast- und Gegenrastelementes solange aufrechterhalten bleibt, bis kein Zurückschnappen in die Raststellung mehr erfolgen kann.

Das Kupplungsteil ist insbesondere zum Verbinden eines Staubsaugersaugrohres mit dem Anschlußstutzen eines Staubsaugermundstückes geeignet.

Anhand eines in der Zeichnung dargestellten Ausführungsbeispieles wird die Erfindung nachfolgend näher beschrieben.

Es zeigt:
- FIG 1: ein -Kupplungsteil im Längsschnitt mit einem eingesteckten, jedoch noch nicht verrasteten Rohr,
- FIG 2: das Kupplungsteil nach Fig. 1 in einem in Umfangsrichtung um 90° ver- setzten Längsschnitt,
- FIG 3: ein Kupplungsteil im Längsschnitt mit einem eingesteckten und verrasteten Rohr,
- FIG 4: das Kupplungsteil nach Fig. 3 in einem in Umfangsrichtung um 90° ver- setzten Längsschnitt,
- FIG 5: ein Kupplungsteil im Längsschnitt mit einem eingesteckten und entrasteten Rohr und
- FIG 6: das Kupplungsteil nach Fig. 5 in einem in Umfangsrichtung um 90° ver- setzten Längsschnitt.

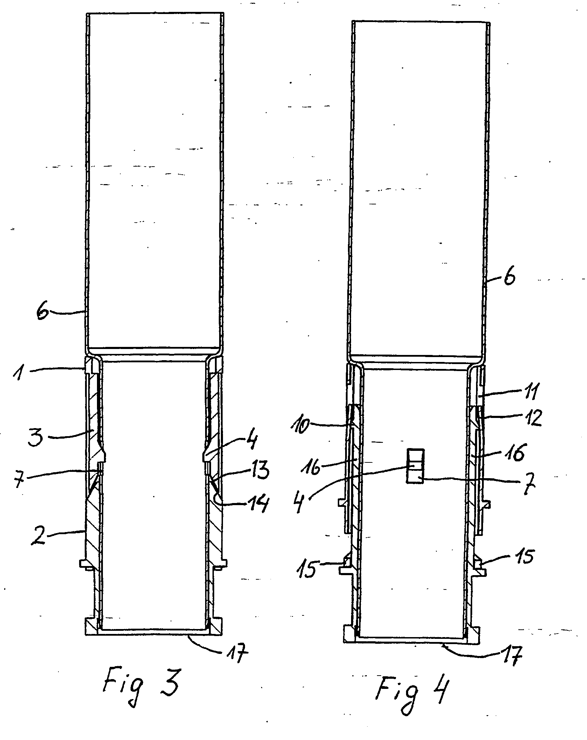

Mit 1 ist ein Hülsenteil und mit 2 eine in das Hülsenteil 1 eingesteckte Innenhülse bezeichnet. Das Hülsenteil 1 ist gegenüber der Innenhülse 2 verschiebbar angeordnet. An dem Hülsenteil 1 sind durch in dessen Wand vorgesehene Längsschlitze ( in der Zeichnung nicht sichtbar) zwei elastische Zungen 3 gebildet, an denen als erste Rastelemente jeweils eine Rastnase 4 angeformt ist. In die Öffnung 5 des Hülsenteiles 1 ist ein Rohr 6 einsteckbar. Innerhalb des in die Öffnung 5 einsteckbaren Wandbereiches des Rohres 6 sind als erste Gegenrastelemente Ausschnittsöffnungen 7 vorgesehen. Beim Einstecken des Rohres 6 in das Hülsenteil 1 trifft das Rohrende 9 auf eine am Rücken der Rastnasen 4 vorgesehene Gleitschräge 8 auf und gleitet an dieser entlang. Hierdurch werden die Rastnasen 4 aufgrund der Elastizität der Zungen 3 nach radial außen gedrückt. Sobald die Rastnasen 4 beim weiteren Einschieben des Rohres 6 mit den Ausschittsöffnungen 7 zur Deckung kommen schnappen die Rastnasen 4 in die Aussschittsöffnungen 7 ein ( siehe Fig. 3). Damit ist das Rohr 6 in dem Hülsenteil 1 gegen Herausgleiten aus dem Hülsenteil 1 gesichert.

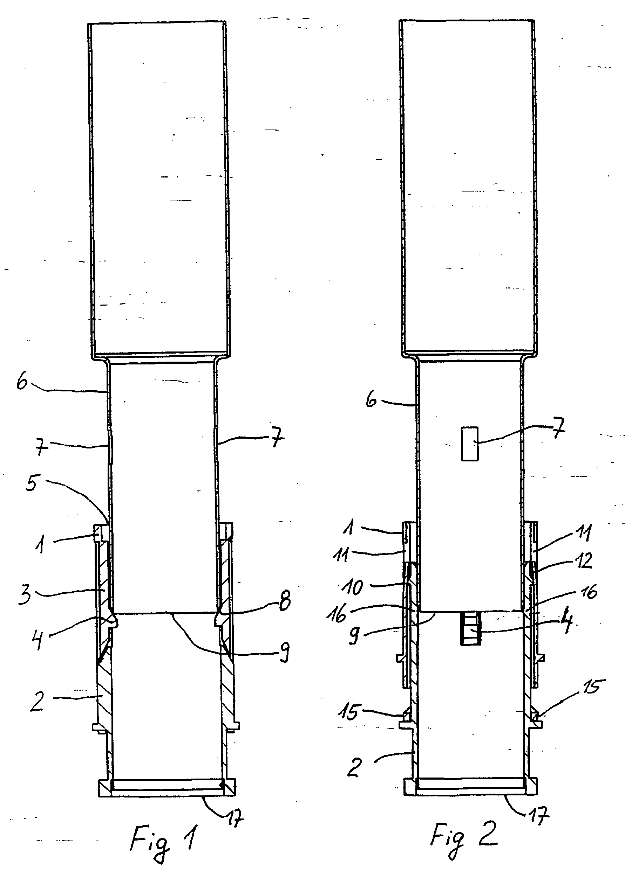

Wie aus Fig. 2 zu ersehen ist, sind umfangsmäßig um 90° versetzt an der Innenhülse 2 zweite, als Rasthaken 10 geformte, Rastelemente vorgesehen. In der Wand des Hülsenteiles 1 sind Schlitze 11 ausgebildet. An dem in Einschieberichtung des Rohres 6 unteren Ende der Schlitze 11 ist aus der Wand des Hülsenteiles 1 jeweils ein Lappen 12 leicht nach radial innen gebogen. Die Lappen 12 bilden die zweiten Gegenrastelemente. Bei nicht eingeschobenem und auch bei eingeschobenem Rohr 6 nehmen die zweiten Rast- und Gegenrastelemente 10 und 12 die in Fig. 2 und Fig. 4 gezeigte Stellung ein, in der keine Verrastung dieser Elemente vorliegt.

Soll das Rohr 6 aus dem Hülsenteil 1 herausgezogen werden, dann muß die Rastverbindung der ersten Rast- und Gegenrastelement 4 und 7 gelöst werden. Hierzu wird das Hülsenteil 1 auf der Innenhülse 2 verschoben. Infolge dieser Verschiebung gleiten die elastischen Zungen 3 mit einer an ihrem freien Ende vorgesehenen Anlaufschräge 13 auf einer an der Innenhülse 2 ausgebildeten Gegenschräge 14 entlang. Hierdurch werden die Zungen 3 nach radial außen gedrängt und dadurch die an ihnen angeformten Rastnasen 4 aus den Ausschnittsöffnungen 7 herausgezogen. Damit ist das Rohr 6 für eine Ausziehbewegung freigegeben.

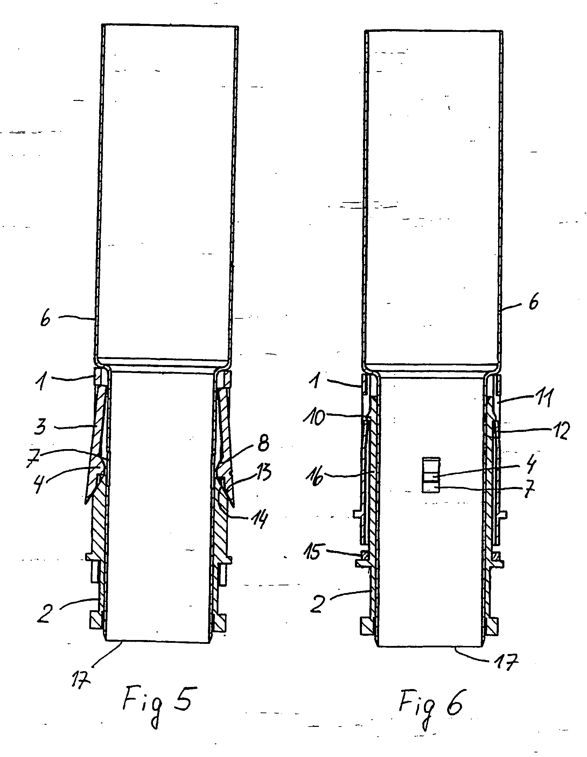

Beim axialen Verschieben des Hülsenteiles 1 gleiten die Lappen 12 über die Rasthaken 10, welche schließlich mit der Kante der Lappen 12 verhaken ( siehe Fig. 6 ). Durch ein eine axiale Verstellkraft auf das Hülsenteil 1 ausübendes Federelement 15 werden die Lappen 12 mit ihrer Kante gegen die Rasthaken 10 gedrückt. Die Rasthaken 10 sind an Wandstreifen 16 der Innenhülse 2 angeformt. Diese Wandstreifen 16 sind in ihrer Ruhelage, d.h. bei nicht eingeschobenem Rohr 6, leicht nach radial innen geneigt. Somit stehen sie in der Verrastungsstellung der Lappen 12 mit den Rasthaken 10 unter einer Vorspannung, die durch das eingeschobene Rohr 6 aufrechterhalten wird.

Der Verrastungsstellung von Rasthaken 10 und Lappen 12 entspricht die Lösestellung der ersten Rast- und Gegenrastelemente, also der Rastnasen 4 und der Ausschnittsöffnungen 7. Wird nun nach dem Lösen der Rastverbindung der ersten Rast- und Gegenrastelemente 4 und 7 das Rohr 6 aus dem Hülsenteil 1 herausgezogen, dann werden gegen Ende der Ausziehstrecke die Wandstreifen 16 freigegeben und federn aufgrund ihrer Vorspannung nach radial innen in ihre Ausgangslage zurück. Dadurch wird die Verrastung der Rasthaken 10 mit den Lappen 12 gelöst und das Hülsenteil 1 durch die Kraft des Federelementes 15 wieder in seine Ausgangslage gedrückt.

Durch die zweiten Rast- und Gegenrastelemente 10 und 12 wird nach Lösen der Rastverbindung der ersten Rast- und Gegenrastelemente 4 und 7 ein Zurückschnappen derselben in ihre Verrastungsstellung verhindert. Es bedarf also keines weiteren Haltens des Hülsenteiles 1 in seiner verschobenen Stellung durch eine Bedienperson. Somit wird eine wesentliche Handhabungserleichterung (Einhandbedienung) erreicht. Eine solche Einhandbedienung ist dann von besonderem Vorteil, wenn die Innenhülse 2 mir ihrem freien Ende 17 fest mit dem Anschlußstutzen eines Staubsaugermundstückes verbunden ist. Es kann dann die Trennung von Saugrohr und Mundstück in besonders einfacher Weise vorgenommen werden, indem nämlich mittels einer Hand das Hülsenteil 1 verschoben und mit der gleichen Hand das Saugrohr aus dem Anschlußstutzen herausgezogen wird.

## Patentansprüche

1. Anordnung mit mindestens einem rohr oder stangenförmigen Teil (6), einem anderen Teil (2) und einen Kupplungsteil zum Verbinden des mindestens einen rohr- oder stangenförmigen Teiles (6) mit dem anderen Teil (2), wobei das Kupplungsteil mindestens ein das rohr- oder stangenförmige Teil (6) aufnehmendes Hülsenteil (1) aufweist, und wobei an der Innenseite des Hülsenteiles (1) mindestens ein erstes Rastelement (4) vorgesehen ist, das mit einem am rohr- oder stangenförmigen Teil (6) vorgesehenen ersten Gegenrastelement (7) zusammenwirkt und die Rastverbindung des ersten Rast- und Gegenrastelementes (4 und 7) durch eine Verstellbewegung des Hülsenteiles (1) lösbar ist, wobei
- mindestens an einem elastischen Bereich (3) des Hülsenteiles (1) als erstes Rastelement eine Rastnase (4) vorgesehen ist, die in einer als erstes Gegenrastelement dienenden Vertiefung oder Ausschnittsöffnung (7) des rohr- oder stangenförmigen Teiles (6) verrastet ist;
- das andere Teil als eine in das Hülsenteil (1) eingesteckte Innenhülse (2) ausgebildet ist, die ihrerseits mit ihrem freien Ende mit einem weiteren Element verbindbar ist;
- das Hülsenteil (1) und die Innenhülse (2) durch ein Federelement (15) in ihrer Ausgangslage zueinander gehalten und durch dieses Federelement (15) nach einer Verschiebe- oder Verdrehbewegung des Hülsenteiles (1) wieder in ihre Ausgangslage bringbar sind; und
**dadurch gekennzeichnet,**
- **dass** an der Innenhülse (2) und dem Hülsenteil (1) mindestens je ein zweites Rast- und Gegenrastelement (10 und 12) vorgesehen sind, die in der durch die Verschiebe- oder Verdrehbewegung des Hülsenteiles (1) bewirkten Lösestellung des ersten Rast- und Gegenrastelementes (4 und 7) ihre Verrastungstellung einnehmen und bei in das Hülsenteil (1) eingestecktem rohr- oder stangenförmigen Teil (6) durch dieses in ihrer Verrastungsstellung gehalten sind.

2. Anordnung nach Anspruch **1**, **dadurch gekennzeichnet, dass** der elastische Bereich aus einem durch Längsschnitte gegenüber der Wand des Hülsenteiles (1) abgetrennten Streifen (3) besteht.

3. Anordnung nach Anspruch 1 oder 2, **dadurch gekennzeichnet, dass** der elastische Bereich (3) durch eine Verschiebe- oder Verdrehbewegung des Hülsenteiles (1) im Sinne eines Lösens der Rastverbindung gegenüber dem ersten Rast- und Gegenrastelement (4 und 7) auslenkbar ist.

4. Anordnung nach Anspruch 3, **dadurch gekennzeichnet, dass** der elastische Bereich (3) mit einer Anlaufschräge (13) versehen ist, die bei der Verschiebe- oder Verdrehbewegung des Hülsenteiles (1) auf eine am anderen Teil (2) ausgebildete Gegenschräge (14) aufgleitet.

5. Anordnung Anspruch 1, **dadurch gekennzeichnet, dass** das zweite Rast- und Gegenrastelement (10 und 12) sowohl umfangsmäßig als in axialer Richtung gegenüber dem ersten Rast- und Gegenrastelement (4 und 7) versetzt sind, wobei die axiale Versetzung in Auszugsrichtung des rohr- oder stangenförmigen Teiles (6) aus dem Hülsenteil (1) vorgenommen ist.

6. Anordnung nach einem der vorhergehenden Ansprüche, **dadurch gekennzeichnet, dass** es zum Verbinden eines Staubsaugersaugrohres mit dem Anschlußstutzen eines Staubsaugermundstückes dient.

## Claims

1. Arrangement with at least one tubular or rod-shaped part (6), another part (2) and a coupling part for connecting the at least one tubular or rod-shaped part (6) with the other part (2), wherein the coupling part has at least one sleeve part (1) receiving the tubular or rod-shaped part (6) and wherein at least one first detent element (4), which co-operates with a first counter-detent element (7) provided at the tubular or rod-shaped part (6), is provided at the inner side of the sleeve part (1), the detent connection of the first detent element and counter-detent element (4 and 7) being releasable by an adjusting movement of the sleeve part (1), wherein
- a detent lug (4), which detents in a depression or cut-out opening (7) of the tubular or rod-shaped part (6) serving as first counter-detent element, is provided as first detent element at least at a resilient region (3) of the sleeve part (1);
- the other part is constructed as an inner sleeve (2) which is inserted into the sleeve part (1) and which in turn is connectible by its free end with a further element; and
- the sleeve part (1) and the inner sleeve (2) are held relative to one another in their initial position by a spring element (15) and after a sliding or turning movement of the sleeve part (1) can be brought back into their initial position by this spring element;
**characterised in that**
- respectively provided at the inner sleeve (2) and the sleeve part (1) are at least one second detent element and counter-detent element (10 and 12), which in the release setting, which is produced by the sliding or twisting movement of the sleeve part (1), of the first detent and counter-detent elements (4 and 7) adopt their detent setting and when the tubular or rod-shaped part (6) is inserted into the sleeve part (1) are retained by this in their detent setting.

2. Arrangement according to claim 1, **characterised in that** the resilient region consists of a strip (3) separated relative to the wall of the sleeve part (1) by longitudinal cuts.

3. Arrangement according to claim 1 or 2, **characterised in that** the resilient region (3) is deflectable relative to the first detent and counter-detent elements (4 and 7) by a sliding or twisting movement of the sleeve part (1) in the sense of releasing the detent connection.

4. Arrangement according to claim 3, **characterised in that** the resilient region (3) is provided with an entry ramp (13) which on sliding or twisting movement of the sleeve part (1) slides on a counter-ramp (14) formed at the other part (2).

5. Arrangement according to claim 1, **characterised in that** the second detent and counter-detent elements (10 and 12) are offset not only circumferentially, but also in axial direction relative to the first detent and counter-detent elements (4 and 7), wherein the axial offset is effected in the direction of withdrawal of the tubular or rod-shaped part (6) from the sleeve part (1).

6. Arrangement according to any one of the preceding claims, **characterised in that** it serves for connecting a vacuum cleaner suction pipe with the connecting stub pipes of a vacuum cleaner mouthpiece.

## Revendications

1. Dispositif comprenant au moins une pièce (6) en forme de tube ou de barre, une autre pièce (2) et une pièce de raccordement pour raccorder l'au moins une pièce (6) en forme de tube ou de barre à l'autre pièce (2), la pièce de raccordement présentant au moins une pièce à douille (1) logeant la pièce (6) en forme de tube ou de barre, et au moins un premier élément d'enclenchement (4) étant ménagé sur le côté intérieur de la pièce à douille (1), cet élément d'enclenchement agissant avec un premier élément de contre-enclenchement (7) ménagé avec une pièce (6) en forme de tube ou de barre, et la liaison d'enclenchement du premier élément d'enclenchement et du premier élément de contre-enclenchement (4 et 7) étant amovible par un mouvement de décalage de la pièce à douille (1),
- un cran d'arrêt (4) étant ménagé au moins sur une partie élastique (3) de la pièce à douille (1) en tant que premier élément d'enclenchement, ce cran d'arrêt étant enclenché dans un approfondissement ou ouverture découpée (7), servant d'élément de contre-enclenchement, de la pièce (6) en forme de tube ou de barre ;
- l'autre pièce étant exécutée en tant qu'une douille intérieure (2) enfoncée dans la pièce à douille (1), qui, de son côté, est raccordable à un autre élément avec son extrémité libre ;
- la pièce à douille (1) et la douille intérieure (1) étant maintenues dans leur position initiale par un élément à ressort (15) et pouvant être de nouveau mises dans leur position initiale par cet élément à ressort (15) après un mouvement de déplacement ou de rotation de la pièce à douille (1) ; et
**caractérisé en ce**
- **qu'**au moins un deuxième élément d'enclenchement et un deuxième élément de contre-enclenchement (10 et 12) sont respectivement ménagés sur la douille intérieure (2) et sur la pièce à douille (1), qui, dans la position de desserrement du premier élément d'enclenchement et du premier élément de contre-enclenchement (4 et 1) résultant du mouvement de déplacement ou de rotation de la pièce à douille (1), prennent leur position d'enclenchement et qui, lorsque la pièce (6) en forme de tube ou de barre est enfoncée dans la pièce à douille (1), sont maintenus dans leur position d'enclenchement par celle-ci.

2. Dispositif selon la revendication 1, **caractérisé en ce que** la partie élastique est constituée d'une bande (3) séparée par des coupes longitudinales par rapport à la paroi de la pièce à douille (1).

3. Dispositif selon la revendication 1 ou 2, **caractérisé en ce que** la partie élastique (3) peut être déviée au moyen d'un mouvement de déplacement ou de rotation de la pièce à douille (1) au sens d'un desserrement de la liaison d'enclenchement par rapport au premier élément d'enclenchement et au premier élément de contre-enclenchement (4 et 7).

4. Dispositif selon la revendication 3, **caractérisé en ce que** la partie élastique (3) est munie d'un biseau d'attaque qui glisse sur un contre-biseau (14) réalisé sur l'autre pièce (2) lors du mouvement de déplacement ou de rotation de la pièce à douille (1).

5. Dispositif selon la revendication 1, **caractérisé en ce que** le deuxième élément d'enclenchement et le deuxième élément de contre-enclenchement (10 et 12) sont décalés, par rapport au premier élément d'enclenchement et au premier élément de contre-enclenchement (4 et 7), aussi bien sur la circonférence qu'en direction axiale, le décalage axial étant réalisé dans le sens d'extraction de la pièce (6) en forme de tube ou de barre hors de la pièce à douille (1).

6. Dispositif selon l'une quelconque des revendications précédentes, **caractérisé en ce qu'**il sert à raccorder un tube d'aspiration d'un aspirateur à l'embout de raccordement d'un bec d'aspirateur.
